# EUROPEAN PATENT SPECIFICATION

(11) **EP 2 656 350 B1**
(45) Date of publication and mention of the grant of the patent: **11.11.2020**
(21) Application number: 11808546.3
(22) Date of filing: 22.12.2011
(51) Int. Cl.: G21B 3/00

(54) **METHODS OF GENERATING ENERGY AND/OR HE-4 USING GRAPHENE BASED MATERIALS**
VERFAHREN ZUR ERZEUGUNG VON ENERGIE UND/ODER HE-4 MIT MATERIALIEN AUF GRAPHENBASIS
PROCÉDÉS DE GÉNÉRATION D'ÉNERGIE ET/OU 4HE UTILISANT DES MATÉRIAUX À BASE DE GRAPHÈNE

(30) Priority: 24.12.2010 US 201061427140 P
(43) Date of publication of application: 30.10.2013
(73) Proprietor: Deuterium Energetics Limited, Great Falls, VA 22066 (US)
(72) Inventor: Cooper, Christopher H., Windsor, VT 05089 (US); Cooper, William K., Santa Fe, NM 87505 (US); Loan, James F., Turner Falls, MA 01376 (US)
(74) Representative: Harris, Jennifer Lucy
(86) International application number: PCT/US2011/066992
(87) International publication number: WO 2012/088472

(56) References cited:
- EP-A1- 1 551 032
- WO-A2-2005/065095
- WO-A2-2007/102860
- US-A1- 2008 123 793

## Description

This application claims the benefit, under 35 USC §119(e) to U.S. Provisional Application Nos. 61/427,140 filed December 24, 2010.

Disclosed herein are methods for generating non-ionizing radiation or non-ionizing ⁴He, by contacting a graphene material with a source of deuterium. In one embodiment, there is a method of generating non-ionizing ⁴He by contacting deuterium with a graphene material, such as carbon nanotubes. There is also disclosed methods of generating non-ionizing radiation, such as visible light, using the described method. There is also disclosed methods of generating energy by contacting deuterium with a graphene material, such as carbon nanotubes to induce local nuclear fusion.

There is a need to generate new sources of energy not based on fossil fuels. While nuclear energy remains a valuable alternative, various types of damaging ionizing radiation may be produced by radioactive decay, nuclear fission and nuclear fusion. For example, it is known that the negatively-charged electrons and positively charged ions created by ionizing radiation may cause damage in living tissue. If the dose is sufficient, the effect may be seen almost immediately, in the form of radiation poisoning. In contrast, non-ionizing radiation is thought to be essentially harmless below the levels that cause heating.

With this in mind, Applicants recognized that a need exists for an alternative source of energy to alleviate our society's current dependence without further impact to the environment or to living organisms associated with nuclear waste or ionizing radiation. The present disclosure describes a method of meeting current and future energy needs, producing commercially valuable non-ionizing radiation and isotopes, namely ⁴He, in an environmentally friendly way. Without being bound by theory, the method can also be used to induce a local nuclear reaction, believed to be fusion, by contacting deuterium with graphene materials in the form of carbon nanotubes.
Examples of similar methods are disclosed in US2008/0123793 A1 and WO2007/102860 A2.

### SUMMARY

In one embodiment, there is disclosed a method of generating non-ionizing radiation, non-ionizing ⁴He atoms, or a combination thereof, the method comprising: contacting graphene materials with a source of deuterium; and placing the graphene materials in the source of deuterium for a time sufficient to generate non-ionizing radiation, non-ionizing ⁴He atoms, such as from 30 minutes to 48 hours, more particularly 1 to 18 hours. In a second embodiment, there is disclosed a method of generating energy, the method comprising contacting carbon nanotubes with deuterium. In a third embodiment, there is disclosed a method of generating energy and ⁴He, by contacting carbon nanotubes with deuterium.

For example, in one embodiment, ⁴He is generated in an amount of at least ten ⁴He atoms above background per hour per microgram of the graphene materials at 0 °C. In another embodiment, 200-300 ppm ⁴He were produced, leading to an average calculated power generation value of 2-3 Watts over a one month period.

As used herein, graphene materials may comprise monolayer graphite, multilayer graphite, single walled carbon nanotubes, multiwalled carbon nanotubes, buckyballs, carbon onions, carbon nanohorns and combinations thereof.

The source of deuterium can be in a liquid, gas, plasma, or supercritical phase.

In one embodiment, the method further comprises the removal of contaminates from the surface of the graphene materials by heating the graphene materials prior to contacting them with a source of deuterium, wherein the heating is performed at conditions sufficient to remove unwanted material from the surface of the graphene materials. In one embodiment, the unwanted materials comprise H₂O, OH, H₂, atomic hydrogen (protium), polymers, oils, amorphous carbon, O₂, solvents, acids, bases, and combinations thereof.

The conditions used to remove contaminants may comprise a time up to 18 hours and a temperature up to 400 °C, such as a time ranging from 1 to 8 hours and a temperature ranging from 80 to 250 °C.

In one embodiment, the graphene material comprises carbon nanotubes, and the method further comprises heating the carbon nanotubes prior to placing them in contact with the source of deuterium at a temperature and for a time sufficient to promote absorption of the deuterium into or onto the carbon nanotubes. For example, the temperature and time sufficient to promote absorption ranges from 30 °C to 300 °C, and from 30 minutes to 8 hours, respectively.

In one embodiment, aging is performed at or below room temperature, such as at a temperature ranging from 20 °C to -100 °C.

In one preferred embodiment, the graphene materials comprise carbon nanotubes that are functionalized and/or doped with nitrogen.

Unlike an alpha particle, the non-ionizing ⁴He atoms generated herein are low energy particles, such as one having an energy of less than 1 KeV, such as less than 100 eV.

In another embodiment, there is disclosed a method of generating non-ionizing radiation, non-ionizing ⁴He atoms, or both, the method comprising:
providing graphene materials in a sealable vessel;
evacuating the sealable vessel to a pressure below atmospheric pressure;
adding deuterium gas to the vessel to achieve a pressure above atmospheric pressure;
performing at least one heating step that further increases pressure inside the vessel;
cooling the vessel; and
keeping the graphene materials in the vessel at room temperature or below for a time sufficient to generate non-ionizing radiation, non-ionizing ⁴He atoms, or both.

In another embodiment, there is disclosed a method of generating non-ionizing radiation, non-ionizing ⁴He atoms, or both, the method comprising:
providing graphene materials in a sealable vessel;
evacuating the sealable vessel to a pressure below atmospheric pressure; and
adding deuterium gas to the vessel.

Non-limiting examples of the non-ionizing radiation that can be generated by the disclosed process include x-rays, visible light, infrared, microwaves, radio waves or combinations thereof.

In yet another embodiment, there is disclosed a method of inducing local nuclear fusion, comprising the steps of:
contacting graphene materials with deuterium; and
placing graphene materials in the deuterium for a time sufficient to generate primarily a plurality ⁴He atoms and energy.

In one embodiment, the graphene material consists essentially of carbon nanotubes, such as nitrogen-containing carbon nanotubes, placed in a deuterium gas.

Aside from the subject matter discussed above, the present disclosure includes a number of other exemplary features such as those explained hereinafter. It is to be understood that both the foregoing description and the following description are exemplary only.

### BRIEF DESCRIPTION OF THE DRAWINGS

The accompanying figures are incorporated in, and constitute a part of this specification.
**Fig. 1** is a schematic diagram of ampoule filled with carbon nanotubes according to the present disclosure. All of the flanges, fittings and tubes are UHV tight.
**Fig. 2** is a "Thermal History" diagram used to enhance storage of hydrogen isotopes in and on the surfaces of the carbon nanotubes including the inter-wall cavities in multi-walled carbon nanotubes according to the present disclosure.
**Fig. 3** is a schematic diagram of an ultra-high vacuum system according to the present disclosure with a quadrupole mass spectrometer (a "residual gas analyzer" or RGA).
**Fig. 4** is a plot showing the RGA data from the first analysis of the gas sample taken from the ampoule containing D₂ gas and carbon nanotubes according to the present disclosure.
**Fig. 5** is a plot showing the stable "mass 4" RGA signal that persisted for more than 5 hours during titanium sublimation pump (TSP) pumping.

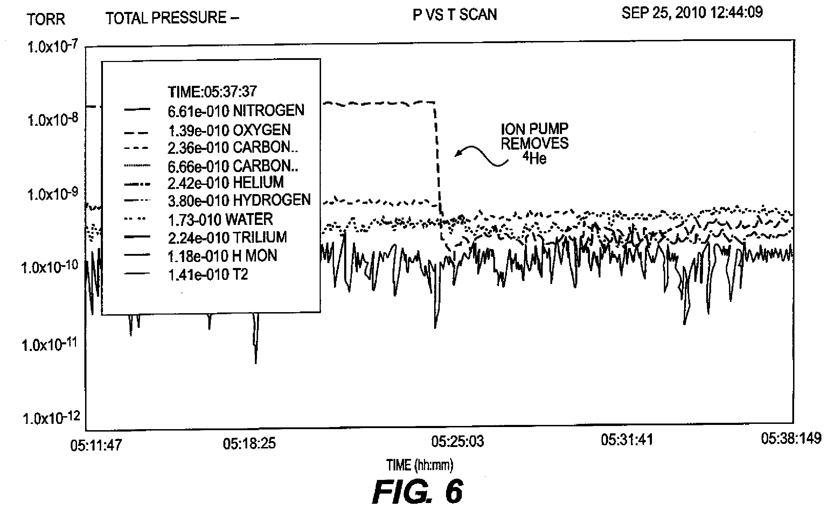

**Fig. 6** is an RGA data plot showing the elimination (10⁻¹⁰ torr range) of the "mass 4" signal upon opening of the Ion-pump gate valve. Note, also the "mass 2" signal is eliminated, indicating it was likely due to doubly ionized ⁴He (what is referred to as a "mass 4" fragment).
**Fig. 7** is an RGA plot of the analysis of the UHP D₂ source gas showing a ⁴He concentration of less than 10 ppm.
**Fig. 8** is a diagram of deuterium pressure cell used according to the present disclosure.
**Fig. 9****.** is a diagram of the fueling station used according to the present disclosure.
**Fig. 10** is a plot showing (top) a typical histogram for the pressure cell facing toward the detector, (bottom) plot showing the associated background run.

### DETAILED DESCRIPTION OF THE INVENTION

### A. Definitions

The following terms or phrases used in the present disclosure have the meanings outlined below:

The term "graphene" is defined as a one-atom-thick sheet of sp²-bonded carbon atoms that are densely packed in a honeycomb crystal lattice.

The term **"nanotube"** refers to a tubular-shaped, molecular structure generally having an average diameter in the inclusive range of 1-60 nm and an average length in the inclusive range of 0.1µm to 250 mm.

The term **"carbon nanotube"** or any version thereof refers to a tubular-shaped, molecular structure composed primarily of carbon atoms arranged in a hexagonal lattice (a graphene sheet) which closes upon itself to form the walls of a seamless cylindrical tube. These tubular sheets can either occur alone (single-walled) or as many nested layers (multi-walled) to form the cylindrical structure.

The term **"ionizing radiation"** refers to particles or electromagnetic waves energetic enough to detach electrons from atoms or molecules, thus ionizing them. Examples of ionizing particles include alpha particles, beta particles, neutrons, gamma-ray, hard x-ray, and cosmic rays.

The term **"non-ionizing radiation"** refers to lower-energy radiation, such as visible light, infrared, microwaves, and radio waves. The ability of an electromagnetic wave (photons) to ionize an atom or molecule depends on its frequency. Radiation on the short-wavelength end of the electromagnetic spectrum-x-rays, and gamma rays-is ionizing. Therefore, when using the term "non-ionizing radiation" it is intended to mean electromagnetic waves having a frequency not sufficient to ionize an atom or molecule.

The term "nuclear fusion" is the process in which two or more atomic nuclei join together, or "fuse", to form a single heavier nucleus. This is usually accompanied by the release or absorption of large quantities of energy.

The term "local **nuclear fusion"** is defined as a distinct, localized, transient fusion event as opposed to a self-sustaining, high energy, nuclear reaction event.

The term "aging" is defined as the period of time the graphene material remains in contact with the source of deuterium. When used in the disclosed method, aging is performed for a time sufficient to promote absorption of the deuterium into or onto the carbon nanotubes, such as 30 minutes to 48 hours, 1 to 24 hours, or in some embodiments, 2 to 12 hours.

The term **"functional group"** is defined as any atom or chemical group that provides a specific behavior. The term "functionalized" is defined as adding a functional group(s) to the surface of the nanotubes and/or the additional fiber that may alter the properties of the nanotube, such as zeta potential.

The term **"impregnated"** is defined as the presence of other atoms or clusters inside of nanotubes. The phrase "filled carbon nanotube" is used interchangeably with "impregnated carbon nanotube."

The term **"doped"** is defined as the insertion or existence of atoms, other than carbon, in the nanotube crystal lattice.

The term **"coated"** is defined as the layering of materials onto the outside of a carbon nanotube or carbon nanotube structure.

The term **"decorated"** is defined as the attachment of nano-scale particles onto the outside of a carbon nanotube or carbon nanotube structure.

The terms **"nanostructured"** and **"nano-scaled"** refers to a structure or a material which possesses components having at least one dimension that is 100nm or smaller. A definition for nanostructure is provided in The Physics and Chemistry of Materials, Joel I. Gersten and Frederick W. Smith, Wiley publishers, p382-383.

The phrase **"nanostructured material"** refers to a material whose components have an arrangement that has at least one characteristic length scale that is 100 nanometers or less. The phrase "characteristic length scale" refers to a measure of the size of a pattern within the arrangement, such as but not limited to the characteristic diameter of the pores created within the structure, the interstitial distance between fibers or the distance between subsequent fiber crossings. This measurement may also be done through the methods of applied mathematics such as principle component or spectral analysis that give multi-scale information characterizing the length scales within the material.

The term **"particle size"** is defined by a number distribution, e.g., by the number of particles having a particular size. The method is typically measured by microscopic techniques, such as by a calibrated optical microscope, by calibrated polystyrene beads, by calibrated scanning probe microscope scanning electron microscope, or optical near field microscope. Methods of measuring particles of the sizes described herein are taught in Walter C. McCrone's et al., The Particle Atlas, (An encyclopedia of techniques for small particle identification), Vol. I, Principles and Techniques, Ed. 2 (Ann Arbor Science Pub.).

The phrases "chosen from" or "selected from" as used herein refers to selection of individual components or the combination of two (or more) components. For example, the nanostructured material can comprise carbon nanotubes that are only one of impregnated, functionalized, doped, charged, coated, and defective carbon nanotubes, or a mixture of any or all of these types of nanotubes such as a mixture of different treatments applied to the nanotubes.

### B. Deuteron-Based Reactions

Fusion of two deuterons that are confined in a solid can theoretically result in three different outcomes as shown in the following equations (Y. E. Kim, Purdue Univ., The 15th International Conf. on Condensed Matter Nuclear Sci. (ICCF-15) Oct 5 -9, 2009*),*

D + D->T + p + 4.03 MeV (1)

D + D -> ³He + n + 3.27 MeV (2)

D + D -> ⁴He + 23.8 MeV (3)

There is a growing consensus that the reaction rate given in equation (3) is much greater than that of equations (1) and (2).

For each ⁴He produced by two deuterons 23.8 MeV energy is released because of the well known relationship between change in mass during a fusion process and energy release (E=mc²). It is speculated that the energy released is in the form or electromagnetic radiation with wave lengths ranging from Gigahertz to extreme UV, sometimes referred to as "soft x-rays".

It has been discovered that graphene materials have an unusual electronic structure making it an ideal candidate for a variety of applications, primarily in the field of electronics. In particular, it has been discovered that the single atomic layer of carbon, characteristic of graphene materials, effectively screens Coulomb interactions, causing graphene to act like an independent electron semimetal. Furthermore, one particular graphene material, carbon nanotubes, can be grown with remarkable uniform diameters, number of walls, and atomic structure. See, "The Effective Fine-Structure Constant of Freestanding Graphene Measured in Graphite," Science, Vol. 330 no. 6005 pp. 805-808 5 November 2010.

Carbon nanotubes have the additional benefit of being able to confine hydrogen in its interior, when properly treated. For example, previous studies have shown that carbon nanotubes, when encapsulated in palladium (Pd), can effectively store hydrogen. Lipson et. al. (Phys. Rev. B 77, 081405(R) 2008*).* The Pd was cathodically charged in a conductive aqueous solution to introduce hydrogen. After hydrogen charging, the tubes were carefully analyzed and found to have as much as 12% hydrogen by weight relative to the pure nanotubes, suggesting that the hydrogen was effectively stored in the nanotubes. Many other studies have demonstrated that H₂ gas (and presumably isotopes as well) can be effectively stored in carbon nanotubes, particularly at lower temperatures, and released from the carbon nanotubes by heating them.

### C. Methods of Generating ⁴He Using Graphene Materials

In one embodiment, high pressure deuterium gas-phase charging of a wide variety of single and multiwall carbon nanotubes was performed in a sealed ampoule and was found to result in the generation of ⁴He in the range of 200 - 300 ppm. The observation of ⁴He suggests deuteron fusions were catalyzed by the carbon nanotubes. Within the resolution of the experiment ³He and tritium (T) were not observed.

For example, an ultra-high vacuum (UHV) system with a residual gas analyzer (RGA) was used to measure the concentration of ⁴He that evolved after approximately 12 days of "aging" in ultra-high purity D₂. Definitive measurements of ⁴He (and ³He) with essentially no interference from D₂, H₂ and DH were achieved by using the pumping characteristics of different pumps on the UHV system. Base pressure in the UHV system was in the 10⁻¹⁰ Torr range and the maximum gas sample pressure was mid 10⁻⁴, giving 6 decades resolution and a detection limit on the order of 1 ppm.

The possibility of background contamination of the experiment by ⁴He present in the air and in the ultra-high purity D₂ source gas was examined and found to be less than 10 ppm in total, and therefore not significant with respect to the measured concentrations (less than 5%).

The results presented herein are, in general, consistent with other reported low-energy nuclear reaction (LENR) experimental results, most notably the work of McKubre at Stanford Research Inst. who reported a peak ⁴He concentration of 11 ppm after 20 days of aging palladium powder in D₂ gas (APS meeting, Denver CO, March 5, 2007).

In the work disclosed below, a wide variety of carbon nanotubes and multi-walled carbon nanotubes contained in a sealed ampoule were exposed to ultra-high purity D₂ gas. An ultra-high vacuum system (UHV) with a residual gas analyzer was designed and constructed specifically to measure ⁴He and ³He in gas samples taken from the ampoule.

### Examples

### Example 1: Gas-Phase Experiment

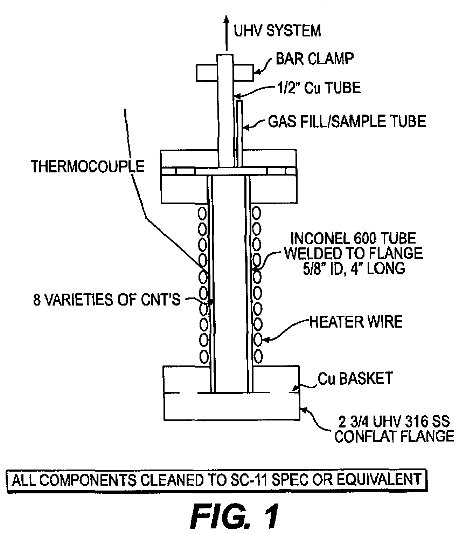

The gas phase experiment involved the storage of isotopes of hydrogen gas at high pressure in and around carbon nanotubes that were loosely compacted and confined in an ampoule, as shown in Figure 1.

The surfaces of the carbon nanotubes were prepared with several different treatments to enhance hydrogen isotope storage, including etching gas and/or liquids and various heat treatments. In all, a total of 8 varieties of nanotubes in roughly equal amounts were prepared and supplied by Seldon Technologies, Windsor, VT.

The eight graphene materials used in this example were:
1) 1. 374g Norit Activated Carbon (Highly graphitized);
2) 0.940g CNI multi-walled carbon nanotubes batch P0320;
3) 0.478g NanoTechLabs N doped (nitrogen doped) multiwall carbon nanotubes;
4) 0.378g NanoTechLabs 3-4mm long multiwall carbon nanotubes;
5) 0.980g NanoTechLabs 3-4mm long multiwall carbon nanotubes acid etched in Neat Nitric acid (1mg/ml) for 1hr at 80°C;
6) 0.044g NanoTechLabs of double walled carbon nanotubes;
7) 0.225 Korean ∼25nm diameter carbon nanotubes; and
8) 1.784g Korean ∼15nm diameter etched in Neat Nitric acid (10mg/ml) for 1hr at 80°C.

All of the carbon nanotubes were mixed in one beaker, then "poured" into the ampoule, lightly compacted and then topped off. The ampoule was then sealed by bolting on the top Conflat® flange, and the gas-fill tube was attached. All of the fittings and valves used in the experiment were clean (Swagelok® Inc. SC-11 spec) and UHV rated. When possible, subassemblies (e.g. nanomaterial preparations) were performed in a class 1000 clean room.

The ampoule had an insulated heater wire attached to elevate the temperature of the carbon nanotube/gas mixture with respect to ambient conditions. Temperature was controlled and measured with a type K thermocouple attached to the side of the ampoule, as shown in Figure 1. A pressure transducer (Omega® PX302 1000 psia (6895 kPa)

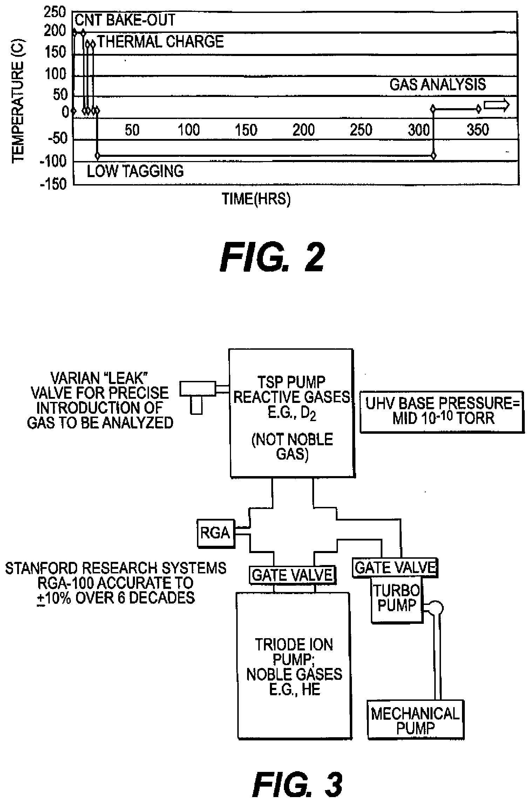

was in line with the gas-fill tube to monitor pressure throughout the experiment. The ampoule was placed in a dewar (insulated flask) that could be filled with ice or dry-ice or any cryogenic liquid for the purpose of decreasing the temperature of the carbon nanotubes and hydrogen isotope gas in the ampoule with respect to ambient conditions (note, dewar is not shown in Figure 2).

### Thermal History

A "thermal history" was applied to the ampoule to enhance the storage (adsorption and absorption) of the D₂ by the Carbon nanotubes. The different steps in the thermal history are shown in Figure 2, and the details and rationale are outlined below.

### Bake-out

The first step in enhancement of the storage of a particular hydrogen isotope, for example deuterium, was to rid the carbon nanotubes of all other isotopes they may have been exposed to. For example, if the carbon nanotubes were exposed to humid air, they will have absorbed H₂O, H₂ and perhaps atomic hydrogen (protium). They may also have various hydrocarbon molecules adsorbed on their surfaces. To rid the carbon nanotubes of unwanted hydrogen, a thermal "bake-out" was performed during which a vacuum was drawn through a large diameter tube. The "bake-out" time/temperature history of the experiment is shown in Figure 2 (approximately 200 °C for 8 hours under a vacuum on the order of 1 x 10⁶ torr.)

During the bake-out unwanted hydrogen isotopes were drawn out of the carbon nanotubes and surrounding metal surfaces into the UHV system. The bake out also removed any residual helium gas that may have been in the system from the helium leak testing used to render the system vacuum tight at ultra high vacuums. The ampoule was allowed to cool to room temperature after the bake-out, and the pressure decreased to a value of on the order of 10⁸ torr. After the ampoule with carbon nanotubes was baked-out, the 12.7 mm diameter copper tube that was used to evacuate the ampoule was clamped shut, sealing the carbon nanotubes from the UHV system.

### Gas-fill

Subsequent to clamping the Cu tube, the ampoule was filled with ultra-high purity (UHP) deuterium gas to a pressure of approximately 175 psia (1206.6 kPa). The D₂ was supplied by Voltaix Inc. (North Branch, N.J.) and was certified to be 99.999% pure with respect to non-hydrogen gases and to have less that 1 ppm He. An evacuation/back-fill procedure was used to insure that the gas lines were purged of air prior to filling the ampoule with gas.

### Hydrogen Charge

After the ampoule was filled with the desired hydrogen isotope (deuterium), there still could have been unwanted hydrogen in various forms absorbed and/or adsorbed to the carbon nanotubes. To essentially "mix" remaining hydrogen with deuterium, a "thermal charging" heat treatment was used. In this example, the ampoule was heated to a temperature of approximately 175 °C for 3 hours. The increase in temperature caused the pressure of the deuterium gas to increase to approximately 220 psia (1517 kPa).

During the thermal charging heat treatment, a greater percentage of deuterium molecules were dissociated and more single deuterium atoms were present in the gas and presumably on and/or in the carbon nanotubes. This could have promoted absorption of the deuterons into inter-wall cavities of multi-walled carbon nanotubes.

### Low Temperature Aging

It is known that lowering of the temperature of carbon nanotube-hydrogen mixtures promotes the storage of the gas by the carbon nanotubes. In this experiment, the ampoule was placed in an insulated container, and the exterior of the ampoule was packed with dry-ice. Subsequently the temperature of the carbon nanotubes and gas dropped to approximately -90 °C. This temperature was held for 288 hours and is referred to as "low temperature aging." Low temperature aging was performed to promote the segregation of hydrogen to grain boundaries. In this experiment aging was intended to segregate deuterons to inter-wall spaces and defects in the graphene structured tube walls (e.g., Stone-Wales defects).

### Gas Analyses

After the "thermal history" the ampoule was allowed to return to ambient temperature and the gas sample tube (shown in Figure 1) was attached to the "leak valve" on the UHV system to analyze the gas for the presence of ⁴He and ³He. The leak valve (Varian Inc.) allowed precise control of the introduction of gas to the vacuum system.

The tool used to analyze gas samples from the ampoule was a Stanford Research Systems RGA-100 quadrupole mass spectrometer (SRS, Palo Alto, CA) which can effectively measure partial pressures of gases with an accuracy of approximately ±10% over a range of 1x10⁻⁴ to 1x10⁻⁴ to 10⁻¹⁰ torr and thus giving a detection limit on the order of 1 ppm. The performance of this "residual gas analyzer" (RGA) was verified by an independent lab (Rao and Dong, J. Vac. Sci. Technol. A 15(3), May/June 1997)*.* RGAs of this variety measure mass-to-charge ratio (m/Q). Most atoms and molecules were single-charged by the RGA ionizer, and hence the RGA data is simply "mass" detection. The use of this instrument to measure a dilute concentration of ⁴He atoms in a predominately D₂ gas presents the problem of discerning between two species that are nominally of "mass 4". A special procedure was developed to effectively remove hydrogen isotopes (and other reactive gases) so that a definitive measurement of He could be made.

To eliminate the presence of D₂ gas in the UHV chamber, the gas sample was pumped using the titanium sublimation pump (TSP) with the gate valves to the Ion-pump and Turbo-pump closed. The TSP pumps reactive gases very efficiently (H₂ at 1,200 L/min. as shown in Table 1). However, noble gases such as ⁴He are not pumped at all. Thus, the basic strategy was to introduce the sample gas, pump on the sample gas with the TSP until the "mass 4" signal stabilizes. The stabilized "mass 4" signal was essentially the partial pressure of ⁴He in the gas sample (assuming it is a small contributor to the total pressure). The ion-pump (Varian ® triode) was very efficient in pumping noble gases and was used to verify the ⁴He signal by eliminating it, and also to check that the base pressure was in the 10⁻¹⁰ torr range.

**Table 1. Pumping characteristics of the vacuum pumps on the UHV system**

| **Pump Type** | **Pressure (torr)** | **Gas removed** | **Pump Efficiency** |
|---|---|---|---|
| Mechanical | 10⁻⁴ | all | 400 liters/min |
| Turbo | 10⁻⁸ | all | 150 liters/min |
| Ti Sublimation | 10⁻¹⁰ | reactive | 1200 liters/min |
| Triode Ion | 10⁻¹⁰ | noble and others | 220 liters/min |

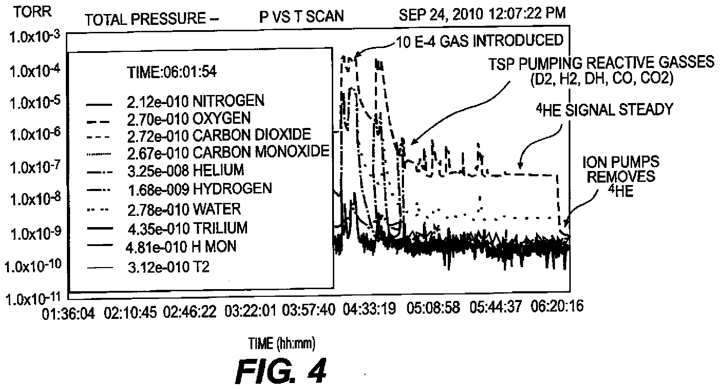

In these experiments, the gas from the ampoule was analyzed twice with slightly different procedures. The basic procedure is given in Table 2. The RGA data from the first analysis of the ampoule gas is shown in Figure 4. Based on this data the partial pressure of ⁴He was determined to be 3.25x10⁻⁸ torr, and the concentration of ⁴He in the ampoule gas was 3.25x10⁻⁸ torr / 1x10⁻⁴ torr = 325 ppm.

In one embodiment, the procedure for the unambiguous determination of ⁴He partial pressure in predominately D₂ gas samples was as follows. The system was baked-out at 200 °C for 24 hours to achieve base pressure of mid 10⁻¹⁰ torr. Next, all flanges and fittings were leaked tested. If leaks occurred, there were fixed and the system was re-baked, if necessary. The turbo-pump and Ion-pump gate-valves were then closed. Next, gas from experimental-ampoule was bled to a pressure of 1x10⁻⁴ torr. The system was then pumped down with TSP to equilibrium to establish ⁴He level. Finally, the ion-gate-valve was opened to verify ⁴He concentration and base pressure.

A second analysis was also performed. Instead of bleeding in the gas to a level of 10⁻⁴ torr with the leak valve, gas from the ampoule was allowed to fill the entire vacuum chamber (with the ion and turbo pumps valved off) to a pressure of approximately 1psia (6.9 kPa).

The turbo-pump backed by the mechanical pump was then used to pump the chamber down 1 x 10⁻⁴ torr by opening and then closing the gate valve. The turbo-pump pumps all gases with "mass 4" with equal speed, so this procedure accurately established the starting gas pressure in a way that did not affect ⁴He/D₂ concentration ratio.

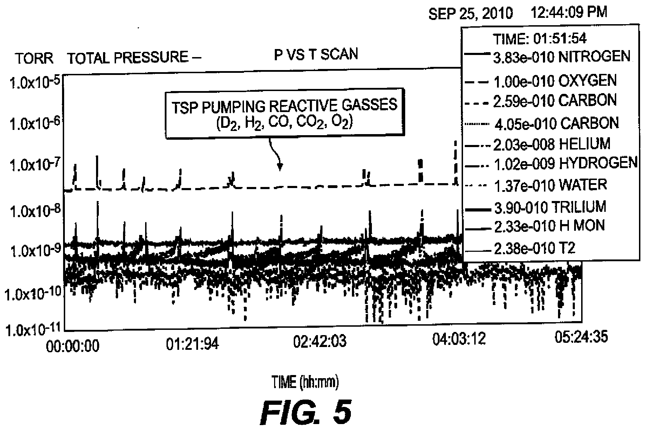

The RGA data with the ion pump gate valve closed is shown in Figure 5. In this second analysis the gas sample was subjected to TSP pumping for over 5 hours to establish that the "mass 4" signal was due only to ⁴He. This data shows a very steady signal 203 ppm ± 2 ppm (2.03 x 10⁻⁸ torr/ 1x10⁻⁴ torr). Upon opening of the ion pump gate valve, all signals dropped to the noise level (10⁻¹⁰ torr) establishing, without any ambiguity, a concentration of 203 ppm ⁴He in the gas sampled from the ampoule.

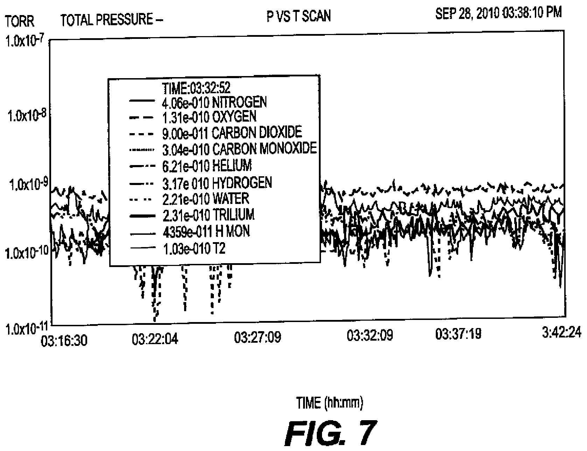

The UHP D₂ source gas was analyzed using the same procedure used in the second analysis (UHV chamber filled with 1 psia (6,9 kPa) D₂ source gas and then pumped down to 1 x 10⁻⁴ torr with turbo-pump.) The RGA data (Figure 7) shows the source gas to have 8 ppm ⁴He at most and thus was a small contributor.

Background contamination of the ampoule gas by ⁴He in the air was also considered. Air contains approximately 5 ppm ⁴He, or a partial pressure of about 7x10⁻⁵ psia (0.5 Pa). If ⁴He leaked into the ampoule and came into equilibrium it would result in a concentration of on the order of 0.5 ppm (7x10⁻⁵ psia (0.5 Pa) / 150 psia (1034 kPa)) which is a relatively insignificant level.

### Calculated Energy and Power

Based on the release of 23.8 MeV per ⁴He atom produced, the total energy released was calculated using the measured concentration of ⁴He, D₂ pressure and internal volume of the ampoule and was found to be on the order of 10⁶ cal. The power output, averaged over a span of 3 weeks, was then calculated and found to be in the range of 2 - 3 W.

As shown, high pressure deuterium gas-phase charging of a wide variety of multiwall and single wall carbon nanotubes was performed in a sealed ampoule and was found to result in the generation of ⁴He in the range of 200 - 300 ppm. The observation of ⁴He suggests deuteron fusions resulted from interaction with the carbon nanotubes. Within the resolution of the experiment ³He and T were not observed suggesting that the following reaction was dominate: D + D -> ⁴He + 23.8 MeV.

### Example 2. Measurement of optical radiation from transmutation of deuterium to helium.

The purpose of this experiment was to look for evidence of the expected energy to be given off by a slow nuclear decay of deuterium to ⁴He. The mass difference between 2 deuterium nucleuses and one Helium nucleus can be related to energy through Einstein's energy equation E = mc². The expected energy is 23.9 MeV. If the energy is radiated by non-ionizing photons of 1eV then one would expect to see a flash of nearly 24 million photons each time a slow deuterium decay to ⁴He happened. As described below, flashes of light from a sample of carbon nanotubes when exposed to deuterium gas at a pressure 55 psi (379.2 kPa) was observed and measured.

### Procedure:

### Pressure cell with Plexiglas window

A pressure cell was made out of a block of 6064 Aluminum measuring 2.6 x 2.6 x 1.2 inches (6.6x6.6x3 cm), and a plate of Plexiglas measuring 2.6 x 2.6 x 0.5 inches (6.6x6.6x1.27 cm). Six equally spaced ¼-20 bolt were drilled and taped at a diameter of 2 in. (5.08 cm) to hold the Plexiglas against an O-ring seal to the Al block. An O-ring grove was machined into the center of the Aluminum block with an ID of 1 in. (2.54 cm). The groove was then polished to ensure that there would be no leaking of deuterium through the o-ring seal. At a diameter of ½ inch (1.27 cm) hole was drilled into the center of the block to a depth of 0.800 in. (2 cm) to contact the sample, viewable through the Plexiglas, with the deuterium gas.

One of the sides of the aluminum block was drilled with a "through hole" that intersected the center hole of the block. This through hole was positioned so that it would not interfere with the threaded bolt holes for holding the Plexiglas to the Aluminum block. Both sides of the through hole was then taped for a ¼ inch (0.63 cm) NPT. On one side a high pressure Swagelok valve was mounted and on the other a Honeywell pressure transducer. Additionally a 1/8 inch (0.31 cm) NPT was drilled and taped for a Swagelok pressure gauge, so the pressure in the cell could be measured and observed.

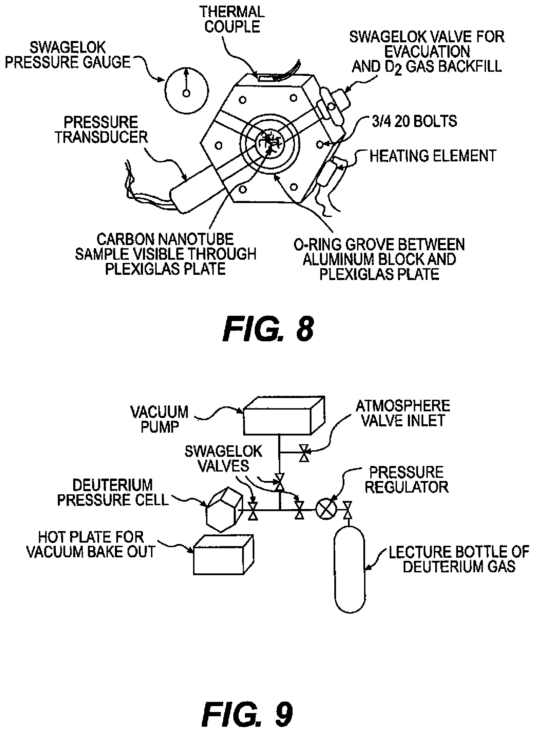

Once all of the components were mounted the cell was moved to a glove box filled with dry nitrogen where upon the sample of carbon nanotubes was inserted into the ½ inch (1.27 cm) hole center topside. The Plexiglas was then bolted to the block with six ¼ inches (15.9 cm) 20 bolts. See Figure 8.

### D₂ Fueling station & Vacuum bake out Procedure

The fueling station was comprised of three basic components: (1) the cell, (2) the vacuum pump and (3) a bottle of deuterium with high pressure regulator. These three components were plumbed together with in a T style assembly of ¼ inch (0.63 cm) stainless steel pipe sections, three valves, and vacuum tight Swagelok connectors. In addition to this, a valve was mounted to the atmosphere close to the vacuum pump. The cell gas manifold was mounted at an elevation so the gas cell could be placed on a hotplate. See Figure 9.

A check was made to ensure that the valve on the lecture bottle was closed. The valves through the regulator, to the cell, to the vacuum pump were all opened, and the valve to the atmosphere was closed. The vacuum pump was turned on and a vacuum was pulled on the gas manifold, the cell and the regulator to remove all atmospheric gases. The cell was then heated to a temperature of 80 °C, for a low temperature bake out for 2 hrs.

The cell was then allowed to cool to a room temperature of 25 °C before being back filled with deuterium. Once the cell had cooled, the valve to the vacuum pump was closed while the valve from the cell to the regulator was left open. The regulator was then closed prior to the opening of the lecture bottle valve. Once the lecture bottle was open, the cell with deuterium was slowly backfilled to a pressure of 55 psi (379.2 kPa).

The valve mounted to the cell was then closed, trapping the deuterium gas in the cell. The lecture bottle valve was closed as well as the regulator. Next, the valves to the vacuum pump and the atmosphere were slowly opened. Once the pressure equalized, the Swagelok connector connecting the cell to the gas manifold was unscrewed. Now, there was a self enclosed pressure vessel filled with only deuterium gas and a sample of carbon nanotubes, that was observable through the Plexiglas.

### Carbon Nanotube Preparation

The carbon nanotubes used in this experiment were 4mm long multi-walled carbon nanotubes from NanoTechLabs, Yankensville, NC, a supplier of ultra long multi-walled carbon nanotubes.

100mg of the carbon nanotubes were acid etched in 100 ml of Neat Nitric acid for 1 hr at 80 °C to remove amorphous carbon and other contaminates or catalyst particles. The acid was then removed through vacuum filtration. The carbon nanotubes were then washed three times in deionized water to remove acid residue.

A thin layer of carbon nanotubes weighing 1mg was formed over a cylindrical sample holder 0.100 inch (0.254 cm) in diameter and ¼ in (0.63 cm) long and placed in an nitrogen furnace for 2 hrs at 400 °C.

The sample was removed directly into a nitrogen glove box where it was then loaded into the gas cell.

### Measurement, Detection & Data Logging Station

Flashes of light were detected and recorded. The basic set up for this data collection station had the same basic components of a typical radiation detection experimental set up. A high voltage (1,000 Volts) photo multiplier tube was used to detect flashes of light from the window side of the cell. The multi-channel analyzer consisted of a pre-amplifier, a sample and hold circuit, an analog to digital converter, and a laptop computer with LabVIEW®.

The pre-amplifier was capacitively coupled to the photo multiplier to produce a low voltage output signal reflecting the change in current through the photo multiplier tube. This low voltage signal was then input to a sample and hold circuit that would save the value of the highest voltage from the voltage pulse.

This data was then converted to a digital signal and sent to the computer. LabVIEW® would then record the data and tabulate in a histogram. Once this action was completed LabVIEW® would send the sample and hold circuit a signal to look for the next voltage pulse. This data collection latency period was on the order of 1 millisecond. A data channel was also used to record the pressure of the cell and a channel to control and record the temperature of the cell.

### The Experiment

This experiment was performed by placing both the pressure cell and the photo multiplier tube in a completely dark steel box with a sealable hinged lid. Holes were drilled through the box and conducting feed-throughs were mounted for the high voltage photo multiplier, signal wires, temperature control, and the pressure transducer signal wires. The window side of the deuterium pressure cell containing the sample of carbon nanotubes was placed toward the photo multiplier window with a space of about 1 cm. When a flash of light even occurred an electron cascade within the photo-multiplier tube would generate a voltage spike.

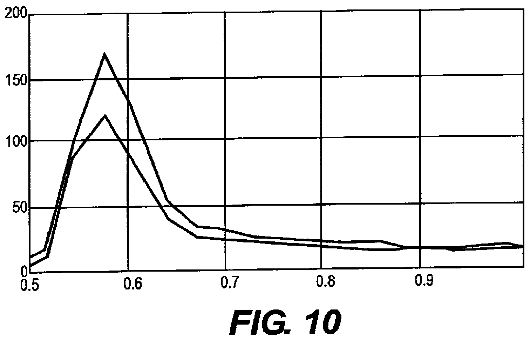

Between each data run the background was measured and recorded. This was performed by turning the cell so that the solid aluminum back side of the cell faced the window, and the Plexiglas window was facing away from the detector. Figure 10.

A total of 18 data runs were performed. As one can see from the following table, all of the experimental runs show a larger number of counts than background ranging from 2c/hr to as high as 200c/hr above background (c/hr = counts per hour). During the last 6 runs, the temperature of the samples were under active control. During longer duration runs, a temperature dependence was shown. At higher temperatures, the cell produced more fusion events per hour than at lower temperatures. It was also clearly shown that the histogram distribution of flash intensity was clearly different from background. The experimental run is nearly equal to background at high intensity, however the low intensity flashes are far more numerous than background. Not only are the total number of events larger for the cell facing the detector but that the histogram has a different shape than when the cell is facing away from the detector.

The temperature dependence may make sense due to the fact that that there will be a larger population of relativistic electrons in the graphene structure of the carbon nanotubes than at lower temperatures. The work of other have shown that graphene structures contain relativistic electrons. When a particle is moving at relativistic velocities it gains mass in proportion to the Laurence contraction. It is expected that massive electrons will drop the radius of the hydrogen Bohr orbit, thus allowing nuclear binding forces to cause a slow decay of two deuterium nuclei into helium. Deuterium, having the same charge as hydrogen has essentially the same Bohr orbit.

**Table 2. Experimental Data for the pressure cell containing carbon nanotubes in contact with deuterium gas, as well as background data for each run.**

| Date | Background Laps Time | Background Counts per Hour | Sample Laps time | Sample Counts per Hour | Difference | % Difference | Temperature degrees C |
|---|---|---|---|---|---|---|---|
| 11/5/2010 | 1:00 | | 108 1:00 | 142 | 34 | 24% | |
| 11/5/2010 | 1:00 | 113 | 1:00 | 139 | 26 | 19% | |
| 11/5/2010 | 1:00 | 136 | 1:00 | 138 | 2 | 1% | |
| 11/5/2010 | 10:00 | 125 | 1:00 | 132 | 7 | 5% | |
| 11/6/2010 | 10:00 | 125 | 4:00 | 133 | 8 | 6% | |
| 11/6/2010 | 24:00 | 116.6 | 4:00 | 136 | 19 | 14% | |
| 11/6/2010 | 24:00 | 116.6 | 24:00 | 138 | 21 | 16% | |
| 11/9/2010 | 24:00 | 115.9 | 24:00 | 148.7 | 33 | 22% | |
| 11/11/2010 | 24:00 | 123.2 | 24:00 | 131.2 | 8 | 6% | |
| 11/14/2010 | 24:00 | 106.5 | 24:00 | 138.4 | 32 | 23% | |
| 11/15/2010 | 24:00 | 106.5 | 24:00 | 132 | 26 | 19% | |
| 11/17/2010 | 24:00 | 106 | 24:00 | 118 | 12 | 10% | |
| 12/5/2010 | 10:00 | 138 | 2:00 | 143 | 5 | 3% | 11 |
| 12/6/2010 | 10:00 | 136.2 | 10:00 | 154 | 18 | 12% | 14 |
| 12/10/2010 | 4:12 | 898 | 24:00 | 1029.6 | 132 | 13% | 10 |
| 12/13/2010 | 24:00 | 865 | 11:00 | 973.4 | 108 | 11% | 8 |
| 12/16/2010 | 10:00 | 855.3 | 13:06 | 874.5 | 19 | 2% | 8 |
| 12/19/2010 | 16:18 | 827 | 10:02 | 1026.5 | 200 | 19% | 32 |
| | | | | | | | |

Unless otherwise indicated, all numbers expressing quantities of ingredients, reaction conditions, and so forth used in the specification and claims are to be understood as being modified in all instances by the term "about." Accordingly, unless indicated to the contrary, the numerical parameters set forth in the following specification and attached claims are approximations that may vary depending upon the desired properties sought to be obtained by the present invention.

Other embodiments of the invention will be apparent to those skilled in the art from consideration of the specification and practice of the invention disclosed herein. It is intended that the specification and examples be considered as exemplary only, with the true scope of the invention being indicated by the following claims.

## Claims

1. A method of generating non-ionizing ⁴He atoms and radiation selected from x-rays, visible light, infrared, microwaves, radio waves or combinations thereof,
said method comprising:
providing carbon nanotubes in a sealable vessel;
evacuating the sealable vessel to a pressure below atmospheric pressure;
adding deuterium gas to said vessel to achieve a pressure above atmospheric pressure;
performing at least one heating step that further increases pressure inside the vessel;
**characterized in that** the method comprises the further steps of:
cooling said vessel; and
aging said carbon nanotubes in said vessel at room temperature or below for a time sufficient to promote absorption of the deuterium into or onto the carbon nanotubes and generate said radiation and said ⁴He atoms;
wherein said non-ionizing ⁴He atoms have an energy of less than 1 KeV.

2. The method of claim 1, further comprising heating the carbon nanotubes prior to adding deuterium gas.

3. The method of claim 2, wherein said heating is performed in a sealed chamber and a temperature to bake-out unwanted materials, said method further comprising evacuating the sealed container to remove the unwanted materials from the sealed container.

4. The method of claim 1, wherein said at least one heating step is performed at temperature ranging from 50°C to 500°C for a time ranging from 20 minutes to 6 hours.

5. The method of claim 1, wherein said aging is performed at a temperature ranging from 20°C to -100°C.

6. The method of claim 1, wherein said carbon nanotubes are placed in the source of deuterium for a time ranging from 1 to 18 hours.

7. The method of claim 1, wherein said carbon nanotubes comprise single walled carbon nanotubes.

8. The method of claim 1, wherein said carbon nanotubes comprise multiwalled carbon nanotubes.

9. The method of claim 1, wherein said carbon nanotubes comprise buckyballs, carbon onions, or carbon nanohorns.

10. The method of claim 1, wherein the source of deuterium is in a liquid, gas, plasma, or supercritical phase.

11. The method of claim 1, further comprising the removal of contaminants from the surface of the carbon nanotubes by heating the carbon nanotubes prior to the contacting step, wherein said heating is performed at conditions sufficient to remove unwanted material from the surface of the carbon nanotubes.

12. The method of claim 1, wherein said method further comprises heating the carbon nanotubes prior to aging at a temperature and for a time sufficient to promote absorption of the deuterium into or onto the carbon nanotubes.

13. The method of claim 1, wherein said carbon nanotubes are functionalized and/or doped with nitrogen.

## Patentansprüche

1. Verfahren zur Erzeugung nichtionisierender ⁴He-Atome und Strahlung ausgewählt aus Röntgenstrahlen, sichtbarem Licht, Infrarot, Mikrowellen, Radiowellen und Kombinationen davon,
wobei das Verfahren umfasst:
Bereitstellen von Kohlenstoff-Nanoröhrchen in einem verschließbaren Gefäß;
Evakuieren des verschließbaren Gefäßes auf einen Druck von unter dem atmosphärischen Druck;
Zugeben von Deuteriumgas zu dem Gefäß, um einen Druck von über dem atmosphärischen Druck zu erhalten;
Durchführen wenigstens eines Schritts des Erhitzens, der den Druck in dem Gefäß weiter erhöht;
**dadurch gekennzeichnet, dass** das Verfahren die weiteren Schritte umfasst:
Abkühlen des Gefäßes; und
Altern der Kohlenstoff-Nanoröhrchen in dem Gefäß bei Raumtemperatur oder darunter für eine Zeit, die ausreicht, um Absorption des Deuteriums in oder auf die Kohlenstoff-Nanoröhrchen zu fördern und die Strahlung und die ⁴He-Atome zu erzeugen;
wobei die nichtionisierenden ⁴He-Atome eine Energie von weniger als 1 keV aufweisen.

2. Verfahren gemäß Anspruch 1, ferner umfassend Erhitzen der Kohlenstoff-Nanoröhrchen vor dem Zugeben von Deuteriumgas.

3. Verfahren gemäß Anspruch 2, wobei das Erhitzen in einer verschlossenen Kammer und bei einer Temperatur zum Ausbrennen unerwünschter Materialien durchgeführt wird, wobei das Verfahren ferner Evakuieren des verschlossenen Behälters zum Entfernen der unerwünschten Materialien aus dem verschlossenen Behälter umfasst.

4. Verfahren gemäß Anspruch 1, wobei der wenigstens eine Schritt des Erhitzens bei einer Temperatur in dem Bereich von 50 °C bis 500 °C für eine Zeit in dem Bereich von 20 Minuten bis 6 Stunden durchgeführt wird.

5. Verfahren gemäß Anspruch 1, wobei das Altern bei einer Temperatur in dem Bereich von 20 °C bis -100 °C durchgeführt wird.

6. Verfahren gemäß Anspruch 1, wobei die Kohlenstoff-Nanoröhrchen für eine Zeit in dem Bereich von 1 bis 18 Stunden in der Quelle von Deuterium angeordnet werden.

7. Verfahren gemäß Anspruch 1, wobei die Kohlenstoff-Nanoröhrchen einwandige Kohlenstoff-Nanoröhrchen umfassen.

8. Verfahren gemäß Anspruch 1, wobei die Kohlenstoff-Nanoröhrchen mehrwandige Kohlenstoff-Nanoröhrchen umfassen.

9. Verfahren gemäß Anspruch 1, wobei die Kohlenstoff-Nanoröhrchen Buckyballs, Kohlenstoffzwiebeln oder Kohlenstoff-Nanohörner umfassen.

10. Verfahren gemäß Anspruch 1, wobei die Quelle von Deuterium in einer flüssigen, gasförmigen, Plasma-oder überkritischen Phase vorliegt.

11. Verfahren gemäß Anspruch 1, ferner umfassend das Entfernen von Verunreinigungsstoffen von der Oberfläche der Kohlenstoff-Nanoröhrchen durch Erhitzen der Kohlenstoff-Nanoröhrchen vor dem Schritt des Inkontaktbringens, wobei der Schritt des Erhitzens bei Bedingungen durchgeführt wird, die ausreichen, um unerwünschtes Material von der Oberfläche der Kohlenstoff-Nanoröhrchen zu entfernen.

12. Verfahren gemäß Anspruch 1, wobei das Verfahren ferner Erhitzen der Kohlenstoff-Nanoröhrchen vor dem Altern auf eine Temperatur und für eine Zeit, die ausreichen, um Absorption des Deuteriums in oder auf die Kohlenstoff-Nanoröhrchen zu fördern, umfasst.

13. Verfahren gemäß Anspruch 1, wobei die Kohlenstoff-Nanoröhrchen mit Stickstoff funktionalisiert und/oder dotiert sind.

## Revendications

1. Procédé de production d'atomes de ⁴He non ionisants et d'un rayonnement choisi parmi les rayons X, la lumière visible, l'infrarouge, les micro-ondes, les ondes radio ou les combinaisons de ceux-ci,
ledit procédé comprenant :
l'introduction de nanotubes de carbone dans un récipient pouvant être fermé hermétiquement ;
la mise sous vide du récipient pouvant être fermé hermétiquement à une pression au-dessous de la pression atmosphérique ;
l'ajout de deutérium gazeux audit récipient pour atteindre une pression au-dessus de la pression atmosphérique ;
la mise en œuvre d'au moins une étape de chauffage qui augmente encore la pression à l'intérieur du récipient ;
**caractérisé en ce que** le procédé comprend les étapes supplémentaires de :
refroidissement dudit récipient ; et
vieillissement desdits nanotubes de carbone dans ledit récipient à température ambiante ou au-dessous de celle-ci pendant une durée suffisante pour favoriser l'absorption du deutérium dans ou sur les nanotubes de carbone et produire ledit rayonnement et lesdits atomes de ⁴He ;
dans lequel lesdits atomes de ⁴He non ionisants ont une énergie inférieure à 1 keV.

2. Procédé selon la revendication 1, comprenant en outre le chauffage des nanotubes de carbone avant l'ajout de deutérium gazeux.

3. Procédé selon la revendication 2, dans lequel ledit chauffage est effectué dans une chambre hermétiquement fermée et à une température permettant d'éliminer les substances non voulues par étuvage, ledit procédé comprenant en outre la mise sous vide du récipient hermétiquement fermé pour enlever les substances non voulues du récipient hermétiquement fermé.

4. Procédé selon la revendication 1, dans lequel ladite au moins une étape de chauffage est effectuée à une température allant de 50 °C à 500 °C pendant une durée allant de 20 minutes à 6 heures.

5. Procédé selon la revendication 1, dans lequel ledit vieillissement est effectué à une température allant de 20 °C à -100 °C.

6. Procédé selon la revendication 1, dans lequel lesdits nanotubes de carbone sont placés dans la source de deutérium pendant une durée allant de 1 à 18 heures.

7. Procédé selon la revendication 1, dans lequel lesdits nanotubes de carbone comprennent des nanotubes de carbone monofeuillets.

8. Procédé selon la revendication 1, dans lequel lesdits nanotubes de carbone comprennent des nanotubes de carbone multifeuillets.

9. Procédé selon la revendication 1, dans lequel lesdits nanotubes de carbone comprennent des buckminsterfullerènes, des nano-oignons de carbone ou des nanocornets de carbone.

10. Procédé selon la revendication 1, dans lequel la source de deutérium est en phase liquide, gazeuse, de plasma ou supercritique.

11. Procédé selon la revendication 1, comprenant en outre l'élimination de contaminants de la surface des nanotubes de carbone par chauffage des nanotubes de carbone avant l'étape de mise en contact, ledit chauffage étant effectué dans des conditions suffisantes pour éliminer une substance non voulue de la surface des nanotubes de carbone.

12. Procédé selon la revendication 1, ledit procédé comprenant en outre le chauffage des nanotubes de carbone avant vieillissement à une température et pendant une durée suffisantes pour favoriser l'absorption du deutérium dans ou sur les nanotubes de carbone.

13. Procédé selon la revendication 1, dans lequel lesdits nanotubes de carbone sont fonctionnalisés et/ou dopés avec de l'azote.
